# EUROPEAN PATENT SPECIFICATION

(11) **EP 3 553 577 B1**
(45) Date of publication and mention of the grant of the patent: **28.07.2021**
(21) Application number: 18305423.8
(22) Date of filing: 10.04.2018
(51) Int. Cl.: G02B 6/42, G02B 6/36

(54) **OPTICAL DEVICE ASSEMBLY COMPRISING A SINGLE-MODE OPTICAL DEVICE SECURED ON A HOLDER AND METHOD OF SECURING THE SAME**
OPTISCHE VORRICHTUNGSANORDNUNG MIT EINER AUF EINER HALTERUNG BEFESTIGTEN EINMODIGEN OPTISCHEN VORRICHTUNG UND VERFAHREN ZUR BEFESTIGUNG DAVON
ENSEMBLE DISPOSITIF OPTIQUE COMPRENANT UN DISPOSITIF OPTIQUE MONOMODE FIXÉ SUR UN SUPPORT ET SON PROCÉDÉ DE FIXATION

(43) Date of publication of application: 16.10.2019
(73) Proprietor: Nokia Solutions and Networks Oy, 02610 Espoo (FI)
(72) Inventor: CHARBONNIER, Philippe, 91530 Saint-Chéron (FR); MALLECOT, Franck, 92120 Montrouge (FR)
(74) Representative: Novagraaf Technologies

(56) References cited:
- US-A- 5 239 601
- US-A1- 2013 004 167

## Description

### Technical Field

Various example embodiments relate to the optical assembly of single-mode devices (active or passive) like lasers, optical amplifiers, modulators (amplitude and/or phase), passive waveguides as well single-mode fibers or optical lenses. More precisely, the active devices are optoelectronic devices mainly based on Group III-V materials used for telecom/datacom applications.

### Background

The assembly of single-mode waveguides should be achieved with a high coupling efficiency under the following conditions:
- the two optical devices are butt-coupled: this means that there is no optical lens in-between; in other words, the two optical modes need to be well matched in dimensions (no magnification of the mode size can be used to adapt one to the other);
- due to the limitation of efficient mode size converters on Group III-V based active devices (lasers, modulators), the diameter of the optical modes are limited to 4 to 5 µm in the best cases: this requires in terms of tolerance of positioning that the optical waveguides need to be aligned and fixed within 1 µm in the two axis perpendicular to the axis of propagation of the optical beam; this 1 µm tolerance corresponds to coupling loss in the range of 1 dB which is a commonly used *"golden rule"* in packaging to guarantee a good coupling efficiency as well as a good reliability.

- these single-mode waveguides are typically assembled using glue; however, the main drawback of using glue for the assembly is the shrinkage that occurs during the liquid/solid transition of the glue; this shrinkage is the main cause of potential parasitic movements leading to final misalignment of the assembly;
- since the two optical devices to be assembled could be active devices, they cannot been buried into the glue, as fibers can, because it is necessary to have access to the electrical contacts on the upper and/or lower faces of the devices;
- all the above-mentioned features are required for low cost and mass production of high performance optical functions (hybrid integration by butt-coupling of best in class optical devices (actives or passives) using a low cost technology of assembly based on gluing).

For instance, in the context of the development of a very low noise tunable laser, the following problem can typically arise. A very low noise laser cavity can be obtained by the hybrid integration of two optical devices, each of which are "Best In-Class" for their features.

The first device is a Semi-conductor Optical Amplifier (SOA) to provide gain. Group III-V devices are (one of) the key leaders for ultra-wide optical bandwidth SOA at 100 nm.

The second device is a low loss, long optical waveguide integrating a filter to ensure the low noise, single frequency and tuning of the laser beam. Dimensions of the SOA chip and of the waveguide chip are typically 2 to 5 mm x 0.5 mm x 0.12 mm and 4 to 10 mm x 5 mm x 1 mm (length x width x thickness) respectively.

The size and the geometry of the chips (of rectangular shap versus the size and the geometry of the fiber (having typically a diameter of 250 µm) makes assembly difficult, and that assembly is made more difficult by the need to preserve the top and/or bottom surfaces of the chips for electrical contact.

Up to now, the known technologies used for the packaging of single-mode devices for Telecom applications rely on YAG welding. Nevertheless, it is mainly limited to the packaging of single devices, in other words to the optical coupling between an optical waveguide chip (laser, modulator) and a single-mode fiber.

In this configuration, an efficient optical coupling may be obtained:
- by using optical lenses: thanks to the magnitude of the lenses, the size of the waveguide mode is adapted to the 10 µm mode diameter of the single-mode fiber which highly relaxes the tolerances of positioning by a factor in the range of 2.5; and
- by having, for example, simultaneous YAG shots to balance any movements due to shrinkage during the welding.

Nevertheless, this technology well mastered for tolerances of +/- 2.5 µm has not been proved for mass production of low cost devices having tolerances in the range of +/- 1 µm at -1 dB losses.

Assembly of optical assemblies by gluing has been developed for multi-mode fiber DataCom applications where the reliability constraints are less stringent than TeleCom applications and where the positioning tolerance are for mode diameters in the range of 50 µm.

Some successful optical assemblies have already been demonstrated by gluing between single-mode fibers and active or passive device.

But these demonstrations were limited to positioning tolerances of the 10 µm mode diameter of the single-mode fiber, which means tolerances of +/- 2.5 µm. In this case, the attachment of the fiber is well adapted to balance the shrinkage effects in the plane perpendicular to the optical beam thanks to its axis of symmetry. In other words, the best way to cancel any parasitic movement due to glue shrinkage is to place the fiber into a circular hole having a diameter a little larger than the diameter of the fiber and to fill in-between with glue by capillarity. Moreover, the +/- 2.5 µm of tolerance can suffer from small shinkrage during the gluing.

US 5239601 A discloses a connection process between an optical fiber and an optical microguide, the microguide having on a substrate, a structure having two media and a core between the media and whose refractive index is higher than those of the media, wherein substantially anisotropic etching takes place of the structure from one end of the microguide, so as to eliminate from the structure a zone allowing the axis of the core as the median line and whose width is at least equal to the external diameter of the fiber. Etching by a dry process takes place of part of the substrate which is located beneath the thus eliminated zone and over a depth making it possible to bring into coincidence the core of the microguide and the core of the fiber, when the latter rests on the bottom of the recess formed in this manner in the substrate and the fiber is fixed in said recess.

### Summary

The invention relates to an optical device assembly according to claim 1, and a corresponding method for assembling the optical device according to claim 13. Different embodiments are set out in the dependent claims.

### Brief Description of the Figures

Some embodiments are now described, by way of example only, and with reference to the accompagnying drawings, in which:
- Figure 1 is a perspective view of a first embodiment of an assembly device comprising a single-mode optical device secured to a U-shaped holder, in which each wall of the holder comprises a protruding portion that is coated by a bonding element for securing the optical device to the holder;
- Figures 2a to 2D are a cross-sectional views of the assembly device in figure 1, for different possible configurations of the locating portions and the binding preventing portions (different angle α variations).
- Figure 3 is a perspective view of the assembly on an optical platform of the device of figures 1 and 2 with an optical device, let say an optical amplifier, mounted on a carrier.
- Figure 4a is a perspective view of a second embodiment of an assembly device comprising a single-mode optical device secured to a U-shaped holder, in which each wall of the holder comprises a locating portion being wetted by a bonding element and a binding preventing portion without any bonding element;
- Figure 4b comprises different side views of the walls of the holder of the assembly device shown on figure 4a showing different configurations of the relative positions of the locating portions and the binding preventing portions;
- Figure 5a is a perspective view of a fiber ferule and figure 5b is a cross-section view of a third embodiment of an assembly device comprising the fiber ferule of figure 5a secured to the U-shaped holder of figures 1 to 3;
- Figure 6 is a flowchart of an embodiment of a method of securing a single-mode optical device on a holder.

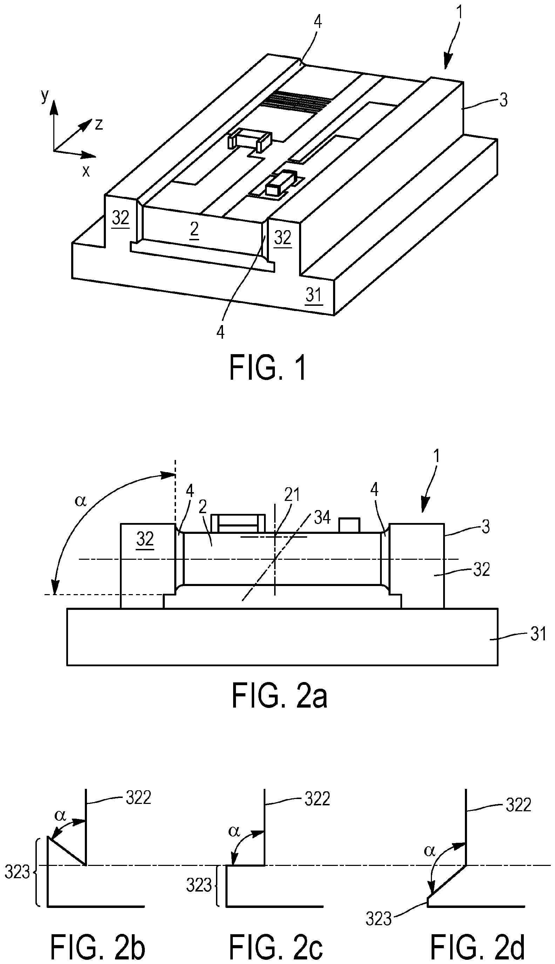

Identical features shown on figures 1 to 5b are hereafter identified by identical reference numbers.

### Description of Embodiments

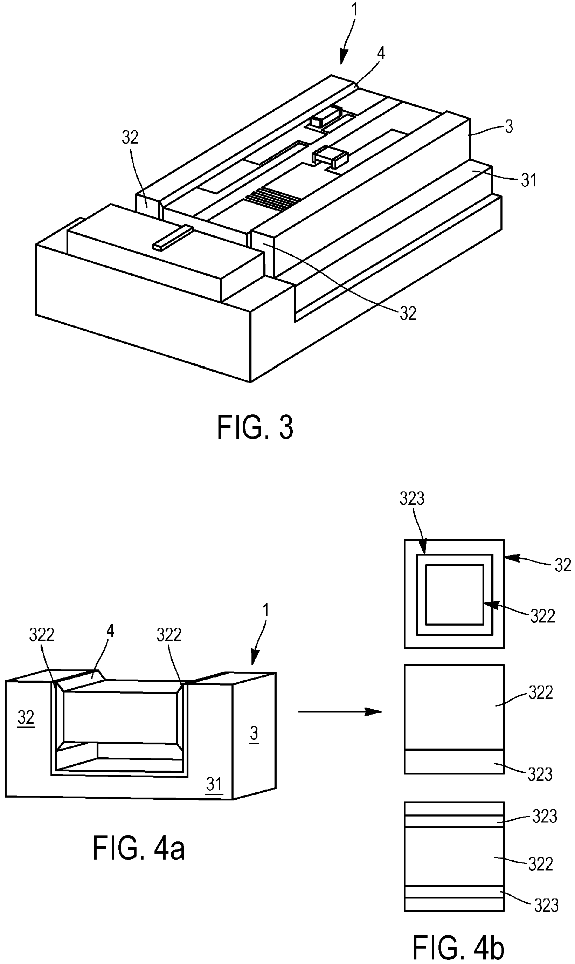

Figures 1 to 3 illustrate a first embodiment of an assembly device 1 comprising a rectangular waveguide chip 2 secured to a U-shaped holder 3. The waveguide chip includes a single-mode optical waveguide illustrated by figure 3.

Figures 4a and 4b illustrate a second embodiment of an assembly device 1 comprising a rectangular 2 optical element which can be a waveguide chip secured to a U-shaped holder 3.

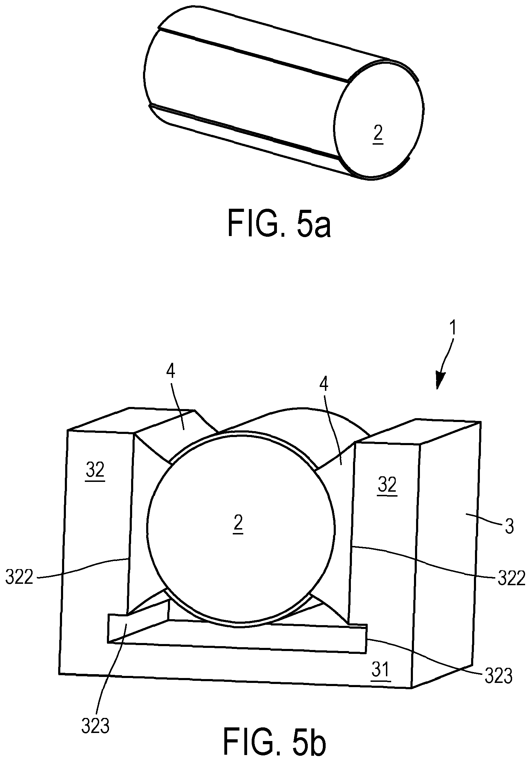

Figures 5a and 5b illustrate a third embodiment of an assembly device 1 comprising a cylindrical element which can be, for example, a fiber ferule or an optical lens 2 secured to a U-shaped holder 3.

Figures 1 to 5b show that each embodiment of assembly device 1 comprises a single-mode optical device 2 secured to a U-shaped holder 3.

In the embodiments shown in figures 1 to 4b, the optical device 2 is a rectangular waveguide chip 2, while in the embodiment shown in Figures 5a and 5b, the optical device 2 is a fibre ferule.

For all the embodiments represented on figures 1 to 5b, the holder 3 comprises a substrate 31 with an upper surface 311 and two separated walls 32, fastened on the substrate 31 so that the holder 3 has a U-shape. The substrate 31 defines a housing 33 having a longitudinal axis of symmetry 34 and dimensions adapted to receive the optical device 2. Each wall 32 of the holder 3 comprises a locating portion 322 for allowing a bonding element 4 to flow along this locating portion 322 and at least one binding preventing portion 323 for preventing the flowing of said bonding element 4 along the binding preventing portion 323. A binding preventing portion 323 is located on a wall 32 between the substrate 31 and the locating portion 322. The locating portions 322 of each wall 32 are disposed facing each other symmetrically with respect to the longitudinal axis 34 of the housing 33. In addition, a bonding element 4 covers the locating portions of said walls 32. The optical device 2 is secured to the walls 32 of the holder 3 so that the longitudinal axis of symmetry 34 of the housing 33 coincides with the optical axis 21 of the optical device, while the binding preventing portions 323 of the walls 32 and the zone between the substrate 31 and the waveguide 2 are free of bonding element 4.

Referring now more specifically to figures 1 to 3 (showing a first embodiment of an assembly device in which the optical device 2 is a rectangular waveguide), each locating portion 322 of the walls 32 is constituted, in the same manner as the embodiment of figure 1, by a protruding portion of the wall 32 connected to each of said walls by two faces respectively, each face defining an angle α with said wall that is strictly greater than 0° and strictly less than 180°, preferably of about 90°. On figures 2a and 2c, the angle α is 90°, while on figures 2b and 2d, it is about 30 to 45° (figure 2b) and about 120° (figure 2d) respectively.

On each side of the waveguide chip 2, there are lateral gaps filled with the bonding element 4. The dimensions of these gaps are typically in the range of 10 to 50 µm in the horizontal direction. In the vertical direction, a deeper gap is designed between the bottom of the waveguide 2 and the upper surface of the substrate, to ensure that no bonding element 4 (for instance glue) is flowing in-between. This embodiment allows the localization of the bonding element 4, for instance glue. In this configuration, the flowing of the bonding element 4 is stopped and controlled to achieve a vertical symmetry in the gluing between the holder 3 and the waveguide 4. Moreover, this design of the holder 3 avoids the filling of the gap in-between the bottom of the waveguide 2 and the holder 3. Thanks to this design, any movement due to the shrinkage of the bonding element 4 during the solidification is canceled owing to the symmetry of the gluing. Referring now more specifically to figures 4a and 4b (showing a second embodiment of an assembly device in which the optical device 2 is also a rectangular waveguide), the locating portions 322 of the walls 32 are surfaces capable of being wetted by the bonding element 4 while the binding preventing portions 323 cannot be wetted by said bonding element 4. This embodiment also allows the localization of the bonding element 4. In this configuration, the flowing of the bonding element 4 is stopped and controlled to achieve a vertical symmetry in the gluing between the holder 3 and the waveguide 4. Moreover, this design of the holder 3 avoids the filling of the gap in-between the bottom of the waveguide 2 and the holder 3. The middle side view of figure 4b corresponds to the realization mode of figure 4a, while the upper and lower side views of figure 4b respectively correspond to embodiments in which the locating portion is centered and surrounded below and above by binding preventing portions. On figure 4b, the upper view differs from the lower view in that the locating portion is also surrounded on the sides by binding preventing portions.

Referring now more specifically to figures 5a and 5b (showing a third embodiment of an assembly device in which the optical device 2 is also a fibre ferule), each locating portion 322 of the walls 32 is constituted by a protruding portion, each defining an angle α with the walls that is strictly greater than 0° and strictly less than 180°, and preferably of about 90°.

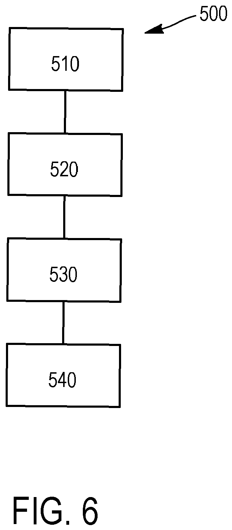

Referring now to figure 6, a flowchart of an embodiment of a method 500 of securing a single-mode optical device (for instance a waveguide chip) on a holder is shown. The method 500 may be implemented by a manufacturer when an optical device assembly 1 comprising a single-mode optical device 2 secured to a holder 3 is in a process of being manufactured.

At step 510, a holder 3 comprising a substrate 31 with an upper surface 311 and two separated walls 32 is provided. Each wall 32 is attached to the upper surface 311 of the substrate 31 at one of their ends, so as to define a housing 33 having a longitudinal axis of symmetry. The dimensions of this housing 33 are adapted to receive a single-mode optical device 2 such a waveguide (for instance the fiber ferule of figure 5a and 5b or the rectangular waveguide of figures 1 to 4b). Figures 1 to 5 show that each wall 32 has a locating portion 322 for allowing a bonding element 4 (such as glue) to flow along the locating portion 322 and at least one binding preventing portion 323 for preventing the flowing of said bonding element 4 along the binding preventing portion. On each wall 32, the binding preventing portion 323 is located between the substrate 31 and the locating portion 322, the locating portions of each wall being disposed facing each other symmetrically with respect to the longitudinal axis of the housing 33.

At step 520, the optical device 2 is positioned in the housing 33 so that it is not in contact (gaps) with the walls 32 of the holder 33 and with the upper surface 311 of the substrate 31, and the longitudinal axis of symmetry of the housing 33 coincides as much as possible with the optical axis 21 of the optical device 2, as in the embodiments illustrated in figures 1 to 5b.

At step 530, a bonding element 4 (such as an ultraviolet-setting adhesive or a thermosetting resin, notably an epoxy-resin) is dispensed in the gaps between the locating portions 322 of the walls 32 and the optical device 2.

At step 540, the bonding element 4 is solidified so as to fasten the optical device 2 on the holder 3.

It is necessary that the optical device 2 can be inserted inside without being in contact with any walls of the holder 3, while ensuring that its optical axis 21 coincides as much as possible with the longitudinal axis of symmetry of the housing 33. Otherwise, the shrinkage of the bonding element 4 during solidification would induce a dramatic misalignment in the lateral direction during the assembling.

Preferably, the optical device 2 may be arranged symmetrically with respect to the plane passing by the middle of each locating portion 322. Otherwise, the shrinkage of the bonding element 4 during solidification would induce a dramatic miss alignment during the assembling as the vertical direction (perpendicular to the optical axis) is more sensitive than the lateral direction to the coupling efficiency in most of the cases. Note that this vertical shrinkage cannot be balanced by symmetry gluing on the top of the optical device because on one hand the top has to be prevented of gluing for future electrical contacts and on the other hand this side of the optical device 2 is used for its manipulation using a proper tool.

## Claims

1. An optical device assembly (1) comprising :
• a single-mode optical device (2) having an optical axis;
• a holder (3) comprising:
∘ a substrate (31) with an upper surface (311),
∘ two separated walls (32) for securing said optical device (2), each being attached to said upper surface (311) at one of their ends, so as to define a housing (33) having a longitudinal axis of symmetry (34),
▪ the dimensions of which are adapted to receive said optical device (2),
▪ each wall (32) having a locating portion (322) for allowing a bonding element (4) to flow along said locating portion (322) and at least one binding preventing portion (323) for preventing the flowing of said bonding element (4) along said at least one binding preventing portion (323), said at least one binding preventing portion (323) being located between the substrate (31) and the locating portion (322),
▪ the locating portion (322) of each wall (32) being disposed facing each other symmetrically with respect to the longitudinal axis of the housing (33),
• the bonding element (4) covering the locating portions (322) of said separated walls (32), **characterised in that**
a gap is designed between the bottom of the single-mode optical device (2) and the upper surface of the substrate (31), so that the whole single-mode optical device (2) is remote from the upper surface of the substrate (31) and that no bonding element (4) is flowing in-between.

2. The assembly of claim 1, wherein the single-mode optical device (2) is arranged symmetrically with respect to a plane passing by the middle of each locating portion (322).

3. The assembly of claims 1 or 2, wherein each locating portion (322) is constituted by a protruding portion of the wall connected to each of said walls (32) by two faces respectively, each face defining an angle α with said wall that is strictly greater than 0° and strictly less than 180°.

4. The assembly of anyone of claims 1 to 3, wherein the angle α is less than or equal to 90°.

5. The assembly of anyone of claims 1 to 4, wherein one of the ends of the locating portions (322) coincides with the free end of the walls (32).

6. The assembly of anyone of claims 1 to 4, wherein the locating portions (322) are arranged symmetrically with respect to a plane passing by the middle of the walls (32).

7. The assembly of anyone of claims 1 to 6, wherein the thickness of the bonding element (4) covering the locating portions (322) of said walls (32) is in the range of 10 µm to 50 µm.

8. The assembly of anyone of claims 1 to 7, wherein the walls (32) of the holder (3) are fastened on the substrate so that the holder has a U-shape.

9. The assembly of anyone of claims 1 to 8, wherein the optical device is a waveguide chip.

10. The assembly of anyone of claims 1 to 8, wherein the single-mode optical device (2) is a fiber ferrule or a rectangular waveguide chip.

11. The assembly of anyone of claims 1 to 10, where the bonding element (4) is constituted by an ultraviolet-setting adhesive or a thermosetting resin.

12. The assembly of anyone of claims 1 to 10, where the bonding element (4) is constituted by a thermosetting resin which is an epoxy-resin.

13. Method for assembling the optical device assembly (1) of claim 1 by securing the single-mode optical device (2) on the holder (3), wherein said optical device (2) has an optical axis, said method providing the steps of:
• A) providing the holder comprising a substrate (31) with an upper surface (311), and two separated walls (32), each being attached to said upper surface at one of their ends, so as to define a housing (33) having a longitudinal axis of symmetry, the dimensions of which are adapted to receive said single-mode optical (2) each wall (32) having a locating portion (322) for allowing the bonding element (4) to flow along said locating portion (322) and at least one binding preventing portion (323) for preventing the flowing of said bonding element (4) along said binding preventing portion (323), said at least one binding preventing portion (323) being located between the substrate (31) and the locating portion (322), the locating portions of each wall (32) being disposed facing each other symmetrically with respect to the longitudinal axis of the housing (33);
• B) positioning the single-mode optical device (2) in the housing (33) so that it is not in contact with the walls (32) of the holder (3) and with the upper surface (311) of the substrate (31);
• C) dispensing the bonding element (4) in the gaps between the locating portions (322) of the walls and the single-mode optical device (2); D) solidifying the bonding element (4) so as to fasten the single-mode optical device (2) on the holder (3).

## Patentansprüche

1. Eine optische Vorrichtungsanordnung (1) mit:
• einer einmodigen optischen Vorrichtung (2) mit einer optischen Achse;
• einer Halterung (3) mit:
o einem Substrat (31) mit einer oberen Fläche (311),
o zwei getrennten Wänden (32) zum Sichern der optischen Vorrichtung (2), wobei jede Wand an einem ihrer Enden an der oberen Fläche (311) befestigt ist, sodass ein Gehäuse (33) festgelegt wird, das eine Längssymmetrieachse (34) aufweist,
▪ dessen Abmessungen so ausgelegt sind, dass die optische Vorrichtung (2) hier untergebracht werden kann,
▪ wobei jede Wand (32) einen Positionierabschnitt (322) aufweist, um einem Klebeelement (4) zu ermöglichen, entlang des Positionierabschnitts (322) zu fließen, und mindestens einen Abschnitt zur Verhinderung der Verklebung (323) besitzt, um zu verhindern, dass das Klebeelement (4) entlang des mindestens einen Abschnitts zur Verhinderung der Verklebung (323) fließt, wobei der mindestens einen Abschnitt zur Verhinderung der Verklebung (323) zwischen dem Substrat (31) und dem Positionierabschnitt (322) angeordnet ist,
▪ wobei der Positionierabschnitt (322) jeder Wand (32) gegenüberliegend und symmetrisch zur Längsachse des Gehäuses (33) angeordnet ist,
• wobei das Klebeelement (4) die Positionierabschnitte (322) der getrennten Wände (32) überdeckt,
**dadurch gekennzeichnet, dass**
ein Spalt zwischen dem unteren Bereich der einmodigen optischen Vorrichtung (2) und der oberen Fläche des Substrats (31) so ausgelegt ist, dass die gesamte einmodige optische Vorrichtung (2) von der oberen Fläche des Substrats (31) entfernt ist und kein Klebeelement (4) dazwischen fließt.

2. Die Anordnung nach Anspruch 1, wobei die einmodige optische Vorrichtung (2) symmetrisch zu einer Ebene angeordnet ist, die durch die Mitte jedes Positionierabschnitts (322) verläuft.

3. Die Anordnung nach Anspruch 1 oder 2, wobei jeder Positionierabschnitt (322) aus einem vorstehenden Abschnitt der Wand besteht, der mit jeder der Wände (32) über jeweils zwei Flächen verbunden ist, wobei jede Fläche einen Winkel α mit der Wand bildet, der strikt größer als 0° und strikt kleiner als 180° ist.

4. Die Anordnung nach einem der Ansprüche 1 bis 3, wobei der Winkel α kleiner oder gleich 90° ist.

5. Die Anordnung nach einem der Ansprüche 1 bis 4, wobei eines der Enden der Positionierabschnitte (322) mit dem freien Ende der Wände (32) zusammenfällt.

6. Die Anordnung nach einem der Ansprüche 1 bis 4, wobei der Positionierabschnitt (322) symmetrisch zu einer Ebene angeordnet ist, die durch die Mitte der Wände (32) verläuft.

7. Die Anordnung nach einem der Ansprüche 1 bis 6, wobei die Dicke des Klebeelements (4) zur Überdeckung der Positionierabschnitte (322) der Wände (32) in einem Bereich von 10 µm bis 50 µm liegt.

8. Die Anordnung nach einem der Ansprüche 1 bis 7, wobei die Wände (32) der Halterung (3) so am Substrat befestigt sind, dass die Halterung eine U-Form aufweist.

9. Die Anordnung nach einem der Ansprüche 1 bis 8, wobei die optische Vorrichtung ein Wellenleiter-Chip ist.

10. Die Anordnung nach einem der Ansprüche 1 bis 8, wobei die einmodige optische Vorrichtung (2) eine Faser-Ferrule oder ein rechteckiger Wellenleiter-Chip ist.

11. Die Anordnung nach einem der Ansprüche 1 bis 10, wobei das Klebeelement (4) aus einem UV-härtenden Kleber oder einem wärmehärtbaren Harz besteht.

12. Die Anordnung nach einem der Ansprüche 1 bis 10, wobei das Klebeelement (4) aus einem wärmehärtbaren Harz besteht, das ein Epoxidharz ist.

13. Verfahren zur Befestigung der optischen Vorrichtungsanordnung (1) nach Anspruch 1 durch Sichern der einmodigen optischen Vorrichtung (2) auf der Halterung (3), wobei die optische Vorrichtung (2) eine optische Achse aufweist, wobei das Verfahren folgende Schritte umfasst:
• A) Bereitstellen der Halterung mit einem Substrat (31) mit einer oberen Fläche (311) und zwei getrennten Wänden (32), wobei jede Wand an einem ihrer Enden an der oberen Fläche befestigt ist, sodass ein Gehäuse (33) festgelegt wird, das eine Längssymmetrieachse aufweist, dessen Abmessungen so ausgelegt sind, dass die einmodige optische Vorrichtung (2) hier untergebracht werden kann, wobei jede Wand (32) einen Positionierabschnitt (322) aufweist, um einem Klebeelement (4) zu ermöglichen, entlang des Positionierabschnitts (322) zu fließen, und mindestens einen Abschnitt zur Verhinderung der Verklebung (323) besitzt, um zu verhindern, dass das Klebeelement (4) entlang des Abschnitts zur Verhinderung der Verklebung (323) fließt, wobei der mindestens einen Abschnitt zur Verhinderung der Verklebung (323) zwischen dem Substrat (31) und dem Positionierabschnitt (322) angeordnet ist, wobei der Positionierabschnitt (322) jeder Wand (32) gegenüberliegend und symmetrisch zur Längsachse des Gehäuses (33) angeordnet ist;
• B) Positionieren der einmodigen optischen Vorrichtung (2) im Gehäuse (33), sodass kein Kontakt zu den Wänden (32) der Halterung (3) und zur oberen Fläche (311) des Substrats (31) besteht;
• C) Abgeben des Klebeelements (4) in die Spalte zwischen den Positionierabschnitten (322) der Wände und der einmodigen optischen Vorrichtung (2);
• D) Verfestigen des Klebeelements (4), sodass die einmodige optische Vorrichtung (2) an der Halterung (3) befestigt wird.

## Revendications

1. Ensemble de dispositif optique (1) qui comprend :
• un dispositif optique monomode (2) qui possède un axe optique ;
• un support (3) qui comprend :
o un substrat (31) avec une surface supérieure (311),
o deux parois séparées (32) destinées à fixer ledit dispositif optique (2), qui sont chacune fixées sur ladite surface supérieure (311) au niveau de leurs extrémités, de façon à définir un logement (33) qui possède un axe longitudinal de symétrie (34),
▪ dont les dimensions sont adaptées pour recevoir ledit dispositif optique (2),
▪ chaque paroi (32) possédant une partie de localisation (322) destinée à permettre à un élément de liaison (4) de s'écouler le long de ladite partie de localisation (322) et au moins une partie anti-liaison (323) destinée à empêcher l'écoulement dudit élément de liaison (4) le long de ladite au moins une partie anti-liaison (323), dans lequel ladite au moins une partie anti-liaison (323) est située entre le substrat (31) et la partie de localisation (322),
▪ les parties de localisation (322) de chaque paroi (32) étant disposées en face les unes des autres de manière symétrique par rapport à l'axe longitudinal du logement (33),
• l'élément de liaison (4) recouvrant les parties de localisation (322) desdites parois séparées (32),
**caractérisé en ce que**
un espace est prévu entre la partie inférieure du dispositif optique monomode (2) et la surface supérieure du substrat (31), de sorte que le dispositif optique monomode entier (2) soit distant de la surface supérieure du substrat (31) et qu'aucun élément de liaison (4) ne s'écoule entre ceux-ci.

2. Ensemble selon la revendication 1, dans lequel le dispositif optique monomode (2) est prévu symétriquement par rapport à un plan qui passe par le milieu de chaque partie de localisation (322).

3. Ensemble selon la revendication 1 ou 2, dans lequel chaque partie de localisation (322) est constituée d'une partie en saillie de la paroi reliée à chacune desdites parois (32) par deux faces, respectivement, dans lequel chaque face définit un angle α avec ladite paroi qui est strictement supérieur à 0° et strictement inférieur à 180°.

4. Ensemble selon l'une quelconque des revendications 1 à 3, dans lequel l'angle α est inférieur ou égal à 90°.

5. Ensemble selon l'une quelconque des revendications 1 à 4, dans lequel l'une des extrémités des parties de localisation (322) coïncide avec l'extrémité libre des parois (32) .

6. Ensemble selon l'une quelconque des revendications 1 à 4, dans lequel les parties de localisation (322) sont disposées symétriquement par rapport à un plan qui passe par le milieu des parois (32).

7. Ensemble selon l'une quelconque des revendications 1 à 6, dans lequel l'épaisseur de l'élément de liaison (4) qui recouvre les parties de localisation (322) desdites parois (32) est comprise entre 10 µm et 50 µm.

8. Ensemble selon l'une quelconque des revendications 1 à 7, dans lequel les parois (32) du support (3) sont fixées sur le substrat de sorte que le support possède une forme de U.

9. Ensemble selon l'une quelconque des revendications 1 à 8, dans lequel le dispositif optique est une puce de guide d'onde.

10. Ensemble selon l'une quelconque des revendications 1 à 8, dans lequel le dispositif optique monomode (2) est une férule de fibre ou une puce de guide d'onde rectangulaire.

11. Ensemble selon l'une quelconque des revendications 1 à 10, dans lequel l'élément de liaison (4) est constitué d'un adhésif qui durcit aux ultraviolets ou d'une résine thermodurcissante.

12. Ensemble selon l'une quelconque des revendications 1 à 10, dans lequel l'élément de liaison (4) est constitué d'une résine thermodurcissante qui est une résine d'époxy.

13. Procédé d'assemblage de l'ensemble de dispositif optique (1) selon la revendication 1 en fixant le dispositif optique monomode (2) sur le support (3), dans lequel ledit dispositif optique (2) possède un axe optique, dans lequel ledit procédé comprend les étapes qui consistent à :
• A) prévoir le support qui comprend un substrat (31) avec une surface supérieure (311), et deux parois séparées (32), qui sont chacune fixées sur ladite surface supérieure à l'une de leurs extrémités, de façon à définir un logement (33) qui possède un axe longitudinal de symétrie, dont les dimensions sont adaptées pour recevoir ledit dispositif optique monomode (2), dans lequel chaque paroi (32) possède une partie de localisation (322) destinée à permettre à l'élément de liaison (4) de s'écouler le long de ladite partie de localisation (322) et au moins une partie anti-liaison (323) destinée à empêcher l'écoulement dudit élément de liaison (4) le long de ladite partie anti-liaison (323), dans lequel ladite au moins une partie anti-liaison (323) est située entre le substrat (31) et la partie de localisation (322), dans lequel les parties de localisation de chaque paroi (32) sont disposées en face les unes des autres de manière symétrique par rapport à l'axe longitudinal du logement (33) ;
• B) positionner le dispositif optique monomode (2) dans le logement (33) de sorte qu'il ne soit pas en contact avec les parois (32) du support (3) et avec la surface supérieure (311) du substrat (31) ;
• C) distribuer l'élément de liaison (4) dans les espaces situés entre les parties de localisation (322) des parois et le dispositif optique monomode (2) ;
• D) solidifier l'élément de liaison (4) de façon à fixer le dispositif optique monomode (2) sur le support (3).
